# EUROPEAN PATENT SPECIFICATION

(11) **EP 3 878 329 B1**
(45) Date of publication and mention of the grant of the patent: **24.08.2022**
(21) Application number: 20163011.8
(22) Date of filing: 13.03.2020
(51) Int. Cl.: A47J 43/046, A47J 43/07

(54) **KNIFE HOLDER, JUG COMBINATION AND BLENDER**
MESSERHALTER, KRUGKOMBINATION UND MIXER
SUPPORT DE COUTEAU, COMBINAISON DE CARAFE ET MÉLANGEUR

(43) Date of publication of application: 15.09.2021
(73) Proprietor: BSH Hausgeräte GmbH, 81739 München (DE)
(72) Inventor: Brecko, Ales, 3000 Celje (SI); Hribersek, Anton, 3330 Mozirje (SI); Kovacec, Bostjan, 1420 Trbovlje (SI); Krivec, Luka, 3331 Nazarje (SI)

(56) References cited:
- WO-A1-00/24302
- WO-A1-2016/120021

## Description

The present invention concerns a knife holder for a (food) blender, the knife holder being configured to be connected to a jug and to hold at least one rotatable knife. The invention further concerns a jug combination for a blender, the jug combination comprising a knife holder and a jug. In addition, the present invention concerns a blender with a jug, a knife holder and a base including an electric motor.

Blenders for chopping and/or liquefying food usually comprise a jug with one or more rotatable knifes located or mountable therein. In particular, the rotatable knifes may be held by a knife holder to be coupled with an electric motor of the blender. For easy cleaning, the knife holder advantageously is detachable from the jug and/or from a base containing the electric motor.

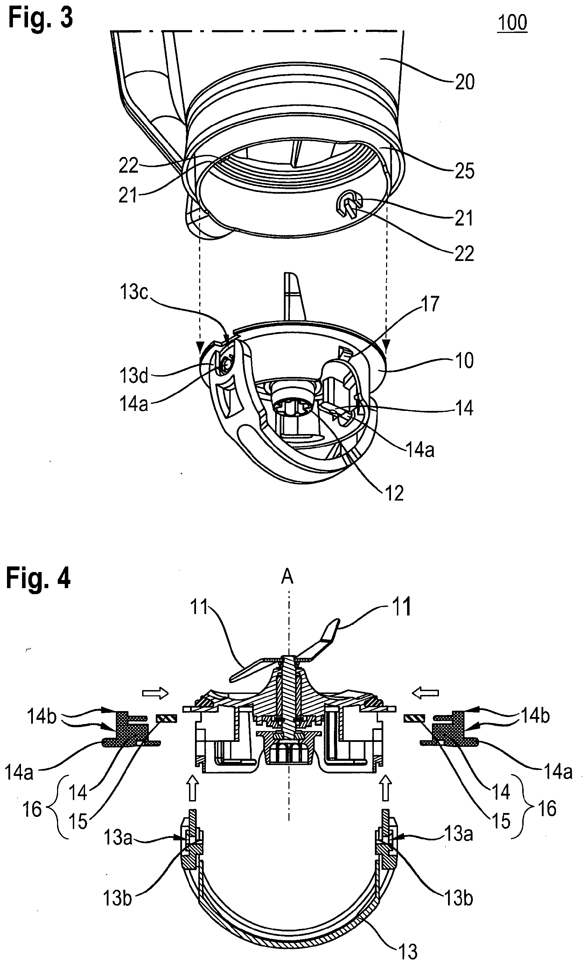

Document WO 2016/120021 A1 discloses a knife holder for a blender, the knife holder being configured to be connected to a jug and to hold at least one rotatable knife, and comprising a clutch for coupling the at least one rotatable knife with a base of the blender; a barrier element 8,9 for obstructing, in a obstructing position, the clutch (see Fig. 3).

It is an object of the present invention to provide for a technique simplifying and securing the handling, in particular the assembling of the components of a blender.

The object is solved by a knife holder according to claim 1, a jug combination according to claim 6 and a blender according to claim 10. Preferred embodiments are disclosed in the dependent claims, the description and the figures.

A knife holder according to the present invention is a component of or for a blender for chopping and/or liquefying food. The knife holder is configured to be connected to a jug of the blender and to hold at least one rotatable knife. It comprises a clutch for coupling the at least one rotatable knife with a base of the blender, in particular with a corresponding clutch element connected to an electric motor of the base. The at least one knife may be firmly or detachably connected/connectable with the clutch. In particular, the knife holder may comprise the at least one knife.

The knife holder according to the present invention further comprises a barrier element which is configured to obstruct (e.g., at least partially cover) the clutch when the barrier element is in a obstructing position. Moreover, the knife holder includes a (deactivatable) snap mechanism. In an active state, the snap mechanism fixes the barrier element in the obstructing position thereof, whereas in a deactivated state (i.e., when deactivated), the snap mechanism releases the barrier element, thus allowing transition of the barrier element from its obstructing position to a position, in which the clutch is made accessible for a corresponding clutch element of the base and enabled to interact therewith. In the following, the latter position is referred to as "unobstructing position". The snap mechanism is configured to be deactivated, i.e. to be operated for transition from its active state to its deactivated state, by contact with the jug when being connected thereto. Thus, the snap mechanism in particular comprises a surface region exposed for contact with the jug. For instance, the snap mechanism may comprise a switch element such as a push-button, a latch and/or a slider configured to be operated by the jug, in particular in a connection movement of the jug relative to the knife holder.

A knife holder according to the present invention thus advantageously improves the security of the blender, as it inhibits coupling of the knife holder with an electric motor of the basis unless the knife holder is connected to the jug. In particular, the risk of injuries caused by inadvertently rotating the at least on knife is dispelled therewith. Therein, no electric safety system is necessary. An integrated connection allows application for various kinds of connections between the jug and the base.

A jug combination according to the present invention is a component of or for a blender. It comprises a knife holder according to an embodiment of the present invention, and a jug detachably connectable to the knife holder.

According to preferred embodiments, the jug comprises at least one protrusion configured to contact the snap mechanism of the knife holder, when the jug is combined with the knife holder, so as to deactivate the snap mechanism. The protrusion may be wedge-shaped, for instance, thus forming a ramp for a respective surface of the snap mechanism.

A blender according to the present invention comprises a jug combination according to an embodiment of the present invention, and base with an electric motor to be coupled with the at least one knife of the knife holder of the jug combination.

According to preferred embodiments of the present invention, the knife holder forms a ground of/for the jug.

Preferably, the barrier element is pivotable (i.e., swivelling) relative to the clutch and/or to a sleeve the knife holder may comprise. The axis of swivelling may be orthogonal to a devised axis of rotation of the one or more knifes (when) held by the knife holder. If comprised, such sleeve may at least partially surround the clutch. In particular, the barrier element may by swivel-mounted to such sleeve, e.g. by means of one or more hinges.

According to preferred embodiments, the barrier element is arcuated, e.g., at least partially shaped as a bow. In embodiments where the knife holder comprises a sleeve as mentioned above, such arcuated barrier element may extend, in its unobstructing position, along the sleeve.

In particular, the barrier element may be formed so as to serve as a handle. The knife holder may thus be conveniently and safely held by a user gripping it at the barrier element when he connects the knife holder with the jug.

The barrier element may preferably have an intake for receiving, in the obstructing position, a fixation structure of the jug , and for at least partially encompassing the fixation structure when removed from the obstructing position (after being released by the snap mechanism), for instance (in embodiments with pivotable barrier element as mentioned above) when the barrier element is swivelled out of its obstructing position. In particular, the intake may be U-shaped. These embodiments enable fixing the jug to the knife holder by means of the barrier element. Analogously, the jug of an inventive jug combination preferably comprises a fixation structure corresponding to (in particular receivable by) such intake.

According to preferred embodiments, the snap mechanism comprises at least one slider element configured to be pushed radially inwards (with respect to a devised axis of rotation of the one or more knifes) for transitioning of the snap mechanism from the active state into the deactivated state. Preferably, the slider element further comprises an elastic element (such as a spring or a rubber block, for example) configured to counteract such pushing with its elastic force. The slider element may comprise a pin forming an axle for the barrier element: In embodiments where the barrier element is pivotable with respect to the clutch or a sleeve as mentioned above, it may then be pivotable around such pin(s). According to preferred embodiments, the jug of an inventive jug combination comprises a cylindrical portion configured to at least partially surround the knife holder when connected thereto. Preferably, such cylindrical portion also at least partially surrounds the barrier element in its unobstructing position. Thereby, when the jug is mounted to the knife holder, the connection thereof is secured.

In the following, preferred embodiments of the present invention are explained with respect to the accompanying drawings.

Reference signs for related elements are used comprehensively and are not defined again for each figure.

Shown is schematically in
- Fig. 1:: an exemplary embodiment of a blender according to the present invention;
- Fig. 2:: a knife holder according to the present invention;
- Fig. 3:: an exemplary embodiment of a jug combination according to the present invention;
- Fig. 4:: construction details of an exemplary knife holder according to the present invention;
- Fig. 5a:: a cross section of an exemplary jug combination when the jug is being connected to the knife holder while the barrier thereof obstructs the clutch;
- Fig. 5b:: a cross section of the exemplary jug combination of Figure 5a when the jug is fixed to the knife holder; and
- Fig. 6:: a base and a knife holder of a blender according to an exemplary embodiment of the present invention.

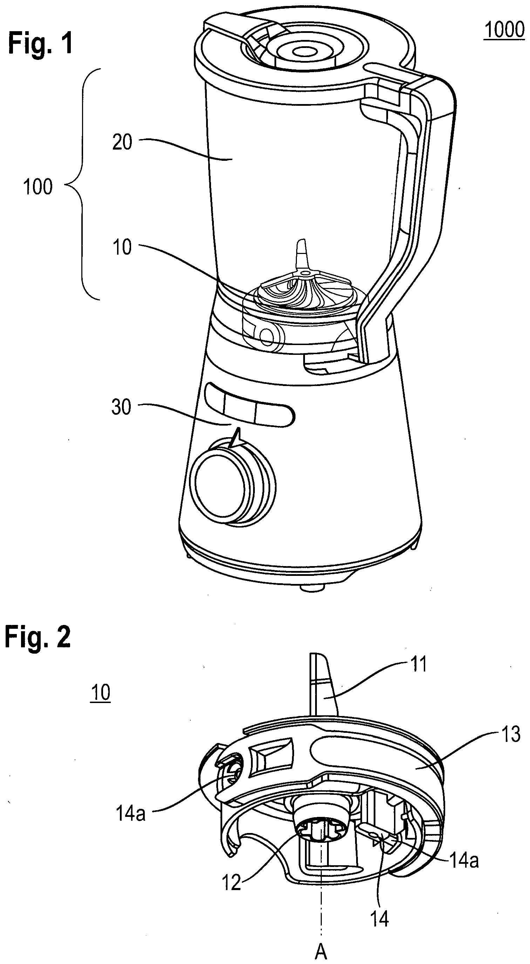

In Figure 1, a blender 1000 according to an exemplary embodiment of the present invention is shown. The blender 1000 comprises a base 30 with an electric motor included therein (not visible in Figure 1) and a jug combination 100 according to an exemplary embodiment of the present invention. The jug combination 100 includes a jug 20 and a knife holder 10; for explanation purposes, the knife holder 10 is made visible in Figure 1; as is to be noted, however, the jug 20 does not have to be transparent. In the situation shown in Figure 1, the knife holder 10 is coupled to an electric motor included in the base (and not visible in Figure 1). Thereby, rotatable knifes comprised by the knife holder 10 can be driven by means of the electric motor.

The coupling is realised by connection of a clutch element (not shown) of the base 30 with a clutch 12 comprised by the knife holder 10, as visible in Figure 2.

In said Figure 2, the knife holder 10 is shown in more detail and in another perspective than in Figure 1. Although in Figure 2 a representation of the jug is omitted to provide a clear picture of the knife holder 10, the knife holder is depicted, in Figure 2, still in a same condition as shown in Figure 1, where the knife holder is mounted in the blender: In this state of the knife holder, the barrier element 13 does not obstruct the clutch 12 (i.e., unblocks the clutch), whereby the clutch 12 is made accessible for the clutch element of the base and enabled to interact therewith.

To realise the deobstruction (i.e., the unblocking), the barrier element 13, which is pivotable relative to the clutch 12, has been swivelled from a obstructing position (shown e.g. in Figure 3) into an unobstructing position. In this swivelling, pins 14a protruding through respective holes in the barrier element provide a respective axle for the barrier element 13. In the present example, the axis of rotation formed thereby for the barrier element is orthogonal to a devised axis A of rotation of the clutch 12 (and the rotatable knifes 11).

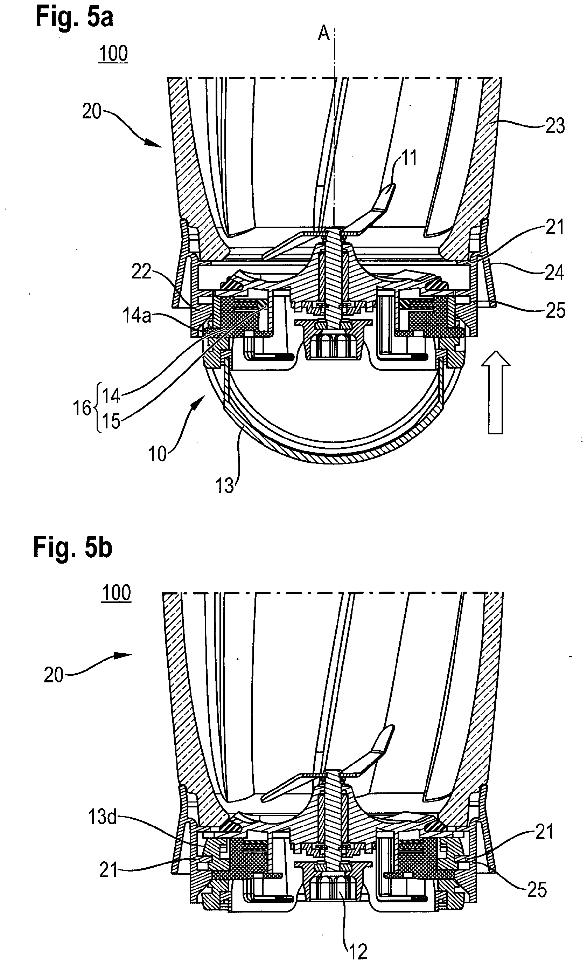

The pins 14a each are formed as respective protrusions of a slider 14. In the situation depicted in Figure 2, the sliders 14 are pushed (by a jug not shown in Figure 2), against the elastic force of elastic elements (not visible in Figure 2), radially inwards with respect to the axis A. Only on that account, barrier element 13 could be swivelled into its unlocking position (in which it is shown in Figure 2), because a respective stopper surface of each of the sliders 14 otherwise abutting against a respective edge surface of the barrier element 13 and, thereby, inhibiting rotation thereof, has been moved, by means of the pushing, away from the barrier element 13. The sliders 14 and the corresponding elastic elements thus form part of a snap mechanism which fixes, in an active state (namely, when the slider is not pushed radially inwards), the barrier element 13 in its obstructing position, and which releases the barrier element in a deactivated state (namely, when the slider is pushed radially inwards), so as to adopt its unobstructing position. The functionality of the snap mechanism is further explained below with respect to Figures 4, 5a and 5b.

In Figure 3, the knife holder 10 is shown prior to being connected to a jug 20 (which is partially shown only). Jug 20 and knife holder 10 together form a jug combination 100 according to an exemplary embodiment of the present invention.

In the situation shown in Figure 3, the barrier element 13 is in its obstructing position, in which it obstructs the clutch 12, such that a connection thereof with a corresponding clutch element of a base is made impossible. In this state, the barrier element 13 forms a handle, at which the knife holder may be easily and safely gripped and held by a user, such as when the user is cleaning the knife holder or when he is connecting it to the jug.

Moreover, in this state of the knife holder 10 (with the barrier element 13 in its obstructing position), a stopper surface 14b of the slider 14 abuts against an edge surface 13b of the barrier element and thus inhibits a rotation (i.e., a swivelling) of the barrier element 13 around the pins 14a protruding through holes 13a of the barrier element 13: This is seen from Figure 4 showing an exploded view of the knife holder 10 in a cross section. In the present case, depending on a swivelling direction of the barrier element 13, both opposite stopper surfaces 14b of the slider 14 may inhibit the swivelling of the barrier element.

When the knife holder 10 and the jug 20 are being connected to each other as indicated in Figure 3 by slashed arrows, protrusions 22 (which in the depicted exemplary embodiment are wedge-shaped) at an inner surface of the jug 20 will push the pins 14a radially inwards (with respect to the devised axis A of rotation of the clutch 12, see Figure 4) against the elastic force of elastic elements 15 (see Figure 4). Thereby, the sliders 14 will be forced radially inwards, and said stopper surfaces 14b will be moved away from said edge surfaces 13b of the barrier element 13, such that the barrier element 13 is enabled to be swivelled into its unobstructing position (shown in Figure 2), thus making the clutch 12 accessible for a corresponding clutch element of a base of the blender.

Thus, the sliders 14 and the corresponding elastic elements (which may be, in particular, springs) 15 together provide a respective snap mechanism 16 (see Figure 4) which, in its active state as shown in Figure 3, fixes the barrier element 13 in its obstructing position, and which release the barrier element when they are deactivated by pushing the respective pins 14a radially inwards (with regard to the axis A).

As is further seen from Figure 3, the barrier element 13 of the knife holder 10 exemplarily shown as an embodiment of the present invention further has an intake 13c for receiving, when the barrier element is in its obstructing position, a fixation structure 21 of the jug 20. When the barrier element 13 thereafter is swivelled, after being released by the deactivated snap mechanism 16, into its unobstructing position, a U-shaped frame 13d confining the intake 13c at least partially encompasses the fixation structure 21. Thereby, the jug 20 is safely and comfortably fixed to the knife holder 10.

The knife holder 10 further comprises a nose 17 configured to latch into a recess (not visible in Figur 3) of the barrier element 13 when the barrier element 13 is in its unobstructing position. Thereby, an unintended rotation of the barrier element 13 and therewith, a loosening of the knife holder 10 from the jug 20 is inhibited even when the jug combination is lifted from a respective base. Preferably, the nose is configured to produce a sound, in particular a click, when it is latching into said recess of the barrier element 13.

In the exemplary embodiment depicted in Figure 3, the jug 20 comprises a cylindrical portion 25 configured to at least partially encompass the knife holder 10 with the barrier element 13 swivelled into its unobstructing position. The cylindrical portion 25 thus further protects the connection of the knife holder 10 with the jug 20.

In Figures 5a and 5b, an inventive jug combination 100 is (partly, i.e. with the jug 20 truncated) shown in respective cross sections. As can be seen in these drawings, the jug 20 comprises a jug wall portion 23 and a holding portion 24 which are (preferably detachably) connected to each other. The jug wall portion 23 and the holding portion 24 may be made a same or of different materials. In particular, the jug wall portion may at least partially be made of glass, and or the holding portion 24 may be at least partially be made of metal, for example.

Figure 5a depicts a situation in which the knife holder is being connected to the jug 20, but still not fully combined therewith. The barrier element 13 is in its obstructing position as described above and may serve as a handle for a user while he is performing the connection.

When the knife holder 10 will be further moved towards the jug 20, as indicated by the arrow, the pins 14a will be pushed, by the protrusions 22 of the jug 20, radially inwards (with regard to the devised axis A of rotation of the knifes 11). Thereby, the sliders 14 having respective stopper surfaces 14b (see Figure 3) will be forced against the elastic elements 15, thus giving way for a respective edge surface 13b of the barrier element 13 when this is swivelled, around the pins 14a, into its unobstructing position.

In Figure 5b, the jug combination 100 is shown after such swivelling. The barrier element 13 thus is in its unobstructing position, such that the clutch 12 can be connected to a respective clutch element of a base. In this position, fixation structures 21 of the jug 20 each are encompassed by a respective frame 13d formed by the barrier element 13 (see Figure 3), thus fixing the knife holder 10 and the jug 20 together. The cylindrical portion 25 of the jug 20 at least partially encompasses the knife holder with its barrier element 13.

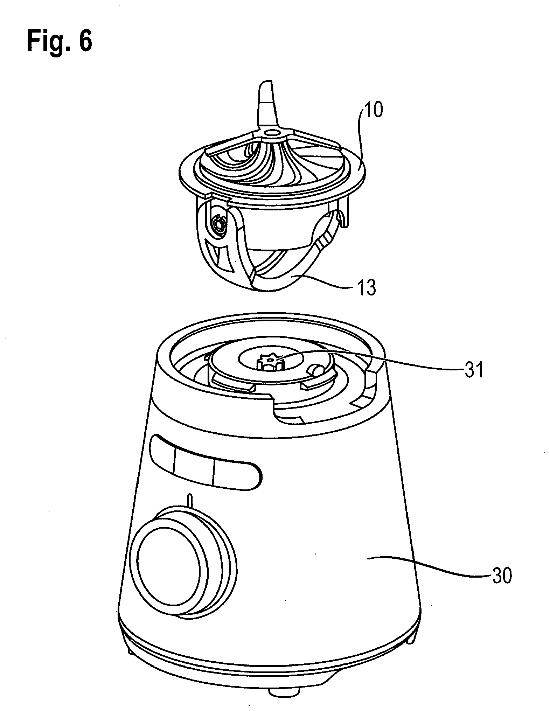

Figure 6 shows the knife holder 10 separated from the base 30 (and the jug) of the blender depicted in Figure 1. In the situation shown in Figure 6, the barrier element 13 is in its obstructing position, in which it inhibits a coupling of the knife holder's clutch (not visible in Figure 6) and the corresponding clutch element 31 of the base, by extending to an access area of the clutch.

Disclosed is a knife holder 10 to be connected to a jug 20 for a blender 1000. The knife holder 10 comprises a clutch 12, a barrier element 13 and a snap mechanism 16. The clutch 12 serves for coupling at least one rotatable knife 11 with a base 30 of the blender.

The barrier element 13 is configured to obstruct the clutch 12 when the barrier element is in an obstructing position. The snap mechanism 16 is configured to fix, in an active state, the barrier element 13 the obstructing position thereof, and to release the barrier element 13 in a deactivated state. The snap mechanism 16 is configured to be operated, for transitioning from its active state into its deactivated state, by contact with the jug 20 when being connected therewith.

Further disclosed are a jug combination 100 comprising a knife holder 10 and a jug 20, and a blender 1000 with a with a jug combination 100 and a base 30.

### Reference signs

- 10: knife holder
- 11: rotatable knife
- 12: clutch
- 13: barrier element
- 13a: through hole
- 13b: edge surface
- 13c: intake
- 13d: frame
- 14: slider
- 14a: pin of slider
- 14b: stopper surface
- 15: elastic element
- 16: snap mechanism

- 20: jug
- 21: fixation structure
- 22: protrusion
- 23: jug wall portion
- 24: holding portion
- 25: cylindrical portion

- 30: base
- 31: clutch element

- 100: jug combination

- 1000: blender

- A: devised axis of rotation of rotatable knife 1

## Claims

1. Knife holder (10) for a blender (1000), the knife holder being configured to be connected to a jug (20) and to hold at least one rotatable knife (11), and comprising
- a clutch (12) for coupling the at least one rotatable knife (11) with a base (30) of the blender;
- a barrier element (13) for obstructing, in a obstructing position, the clutch (12); **characterized by**
- a snap mechanism (16) configured to fix, in an active state, the barrier element (13) in the obstructing position thereof, and to release the barrier element (13) when deactivated,
wherein the snap mechanism (16) is configured to be deactivated by contact with the jug (20) when being connected therewith.

2. Knife holder according to claim 1, wherein the barrier element (13) is pivotable relative to the clutch (12).

3. Knife holder according to claim 1 or 2, wherein the barrier element (13) has an intake (13c) for receiving, in the obstructing position, a fixation structure (21) of the jug (20), and for at least partially encompassing the fixation structure (21) when removed from the obstructing position.

4. Knife holder according to one of the preceding claims, wherein the snap mechanism (16) comprises at least one slider element (14) configured to be pushed radially inwards for deactivating the snap mechanism (16).

5. Knife holder according to claim 4, wherein the at least one slider element (14) comprises a pin (14a) forming an axle for the barrier element (13).

6. Jug combination (100) for a blender (1000), the jug combination comprising a knife holder (10) according to one of the preceding claims and a jug (20) detachably connectable to the knife holder.

7. Jug combination according to claim 6, wherein the jug (20) has a protrusion (22) configured to contact the snap mechanism (16) of the knife holder when the jug is combined with the knife holder, so as to deactivate the snap mechanism (16).

8. Jug combination according to one of claims 6 or 7, wherein the jug comprises a cylindrical portion (25) configured to at least partially surround the knife holder (10), when connected thereto, with the barrier element (13) in its unobstructing position.

9. Jug combination according to one of claims 6 to 8, wherein the knife holder (10) is in accordance with claim 3 and wherein the jug comprises a fixation structure (21) corresponding to the intake (13c) of the barrier element (13).

10. Blender (1000) comprising a jug combination (100) according to one of claims 6 to 8 and a base (30) with an electric motor to be coupled with the at least one knife of the knife holder.

## Patentansprüche

1. Messerhalter (10) für einen Mixer (1000), wobei der Messerhalter so konfiguriert ist, dass er sich mit einem Becher (20) verbinden lässt und mindestens ein drehbares Messer (11) halten kann und Folgendes umfasst:
- eine Kupplung (12) zum Koppeln des mindestens einen drehbaren Messers (11) mit einem Sockel (30) des Mixers,
- ein Begrenzungselement (13) zum Blockieren der Kupplung (12) in einer Blockierposition,
**gekennzeichnet durch** einen Rastmechanismus (16), der so konfiguriert ist, dass er in einem aktiven Zustand das Begrenzungselement (13) in seiner Blockierposition fixiert und das Begrenzungselement (13) freigibt, wenn er deaktiviert ist,
wobei der Rastmechanismus (16) so konfiguriert ist, dass er durch Kontakt mit dem Becher (20) deaktiviert wird, wenn er damit verbunden ist.

2. Messerhalter nach Anspruch 1, wobei das Begrenzungselement (13) in Bezug zu der Kupplung (12) schwenkbar ist.

3. Messerhalter nach Anspruch 1 oder 2, wobei das Begrenzungselement (13) eine Aufnahme (13c) aufweist, die in der Blockierposition eine Fixieranordnung (21) des Bechers (20) aufnimmt und die Fixieranordnung (21) zumindest teilweise umgibt, wenn es aus der Blockierposition genommen wird.

4. Messerhalter nach einem der vorhergehenden Ansprüche, wobei der Rastmechanismus (16) mindestens ein Schiebeelement (14) umfasst, das so konfiguriert ist, dass es sich zum Deaktivieren des Rastmechanismus (16) radial nach innen drücken lässt.

5. Messerhalter nach Anspruch 4, wobei das mindestens eine Schiebeelement (14) einen Stift (14a) umfasst, der eine Achse für das Begrenzungselement (13) bildet.

6. Becherkombination (100) für einen Mixer (1000), die einen Messerhalter (10) nach einem der vorhergehenden Ansprüche und einen lösbar mit dem Messerhalter verbindbaren Becher (20) umfasst.

7. Becherkombination nach Anspruch 6, wobei der Becher (20) einen Vorsprung (22) aufweist, der so konfiguriert ist, dass er, wenn der Becher mit dem Messerhalter zusammengefügt ist, den Rastmechanismus (16) des Messerhalters berührt und so deaktiviert.

8. Becherkombination nach einem der Ansprüche 6 oder 7, wobei der Becher einen zylinderförmigen Abschnitt (25) umfasst, der so konfiguriert ist, dass er den Messerhalter (10) zumindest teilweise umgibt, wenn er damit verbunden ist und sich das Begrenzungselement (13) in seiner Freigabeposition befindet.

9. Becherkombination nach einem der Ansprüche 6 bis 8, wobei der Messerhalter (10) Anspruch 3 entspricht und der Becher eine Fixieranordnung (21) umfasst, die der Aufnahme (13c) des Begrenzungselements (13) entspricht.

10. Mixer (1000), der eine Becherkombination (100) nach einem der Ansprüche 6 bis 8 und einen Sockel (30) mit einem Elektromotor umfasst, der sich mit dem mindestens einen Messer des Messerhalters koppeln lässt.

## Revendications

1. Porte-couteau (10) pour un mixeur (1000), le porte-couteau étant configuré pour être connecté à une carafe (20) et pour maintenir au moins un couteau rotatif (11), et comprenant :
- un embrayage (12) pour accoupler l'au moins un couteau rotatif (11) avec une base (30) du mixeur,
- un élément barrière (13) pour obstruer, dans une position d'obstruction, l'embrayage (12),
**caractérisé par** :
- un mécanisme d'encliquetage (16) configuré pour fixer, dans un état actif, l'élément barrière (13) dans la position d'obstruction de celui-ci, et pour libérer l'élément barrière lorsqu'il est désactivé,
dans lequel le mécanisme d'encliquetage (16) est configuré pour être désactivé par contact avec la carafe (20) lorsqu'elle est reliée à celui-ci.

2. Porte-couteau selon la revendication 1, dans lequel l'élément barrière (13) peut pivoter par rapport à l'embrayage (12).

3. Porte-couteau selon la revendication 1 ou 2, dans lequel l'élément barrière (13) comprend une admission (13c) pour recevoir, dans la position d'obstruction, une structure de fixation (21) de la carafe (20), et pour entourer au moins en partie la structure de fixation (21) lorsqu'il est enlevé de sa position d'obstruction.

4. Porte-couteau selon l'une des revendications précédentes, dans lequel le mécanisme d'encliquetage (16) comprend au moins un élément de coulisseau (14) configuré pour être poussé radialement vers l'intérieur pour désactiver le mécanisme d'encliquetage (16).

5. Porte-couteau selon la revendication 4, dans lequel l'au moins un élément de coulisseau (14) comprend une broche (14a) formant un axe pour l'élément barrière (13).

6. Combinaison de carafe (100) pour un mixeur (1000), la combinaison de carafe comprenant un porte-couteau (10) selon l'une des revendications précédentes et une carafe (20) pouvant être connectée de façon détachable au porte-couteau.

7. Combinaison de carafe (100) selon la revendication 6, dans laquelle la carafe (20) comprend une partie saillante (22) configurée pour entrer en contact avec le mécanisme d'encliquetage (16) du porte-couteau lorsque la carafe est associée au porte-couteau, de façon à désactiver le mécanisme d'encliquetage (16).

8. Combinaison de carafe (100) selon l'une des revendications 6 ou 7, dans laquelle la carafe comprend une partie cylindrique (25) configurée pour entourer au moins en partie le porte-couteau (10), lorsqu'elle est connectée à celui-ci, l'élément barrière (13) étant dans sa position de non-obstruction.

9. Combinaison de carafe (100) selon l'une des revendications 6 à 8, dans laquelle le porte-couteau (10) est défini selon la revendication 3, et dans laquelle la carafe comprend une structure de fixation (21) correspondant à l'admission (13c) de l'élément barrière (13).

10. Mixeur (1000) comprenant une combinaison de carafe (100) selon l'une des revendications 6 à 8, et une base (30) comprenant un moteur électrique à accoupler à l'au moins un couteau du porte-couteau.
